# EUROPÄISCHE PATENTSCHRIFT

(11) **EP 4 296 120 B1**
(45) Veröffentlichungstag und Bekanntmachung des Hinweises auf die Patenterteilung: **08.01.2025**
(21) Anmeldenummer: 22180173.1
(22) Anmeldetag: 21.06.2022
(51) Int. Cl.: B60Q 1/04

(54) **STOSSABSORBIERENDES FAHRZEUGSCHEINWERFERSYSTEM**
SHOCK ABSORBING VEHICLE HEADLIGHT SYSTEM
SYSTÈME DE PHARE DE VÉHICULE AMORTISSANT DES CHOCS

(43) Veröffentlichungstag der Anmeldung: 27.12.2023
(73) Patentinhaber: ZKW Group GmbH, 3250 Wieselburg (AT)
(72) Erfinder: Zeuner, Markus, 3240 Mank (AT); Bemmerl, Markus, 3382 Loosdorf (AT)
(74) Vertreter: Patentanwaltskanzlei Matschnig & Forsthuber OG

(56) Entgegenhaltungen:
- DE-A1- 10 257 267
- DE-A1- 102011 122 450
- FR-A1- 2 983 142
- JP-A- H03 208 738
- US-A1- 2020 324 684

## Beschreibung

Die Erfindung betrifft ein stoßabsorbierendes Fahrzeugscheinwerfersystem aufweisend
- zumindest ein mit einem Fahrzeug fest verbindbares Fahrzeugrahmenelement,
- ein an dem Fahrzeugrahmenelement verschwenkbar und/ oder verschiebbar gehaltenes Fahrzeugscheinwerfergehäuse mit zumindest einem mit dem Fahrzeugscheinwerfergehäuse verbundenen Führungsmittel, welches vorzugsweise fest mit dem Fahrzeugscheinwerfergehäuse verbunden ist, wobei das Fahrzeugrahmenelement zumindest eine Führung zur Aufnahme und Führung des Führungsmittels aufweist, wobei das Führungsmittel mit der Führung in Eingriff steht, sodass das Fahrzeugscheinwerfergehäuse durch Verschiebung des Führungsmittels entlang der Führung geführt und dadurch in Bezug auf das Fahrzeugrahmenelement um eine Schwenkachse verschwenkbar und/oder verschiebbar ist.

Um Fußgänger oder Fahrradfahrer, bzw. ganz allgemein vulnerable Verkehrsteilnehmer, im Falle einer Kollision mit einem Fahrzeug zu schützen, sind im Stand der Technik stoßabsorbierende Fahrzeugscheinwerfersysteme bekannt. Diese weisen üblicherweise ein federnd gehaltenes Scheinwerfergehäuse auf, welches dazu eingerichtet ist, im Falle einer Kollision des Fahrzeugs mit einem Fußgänger Stoßenergie aufzunehmen. Das Dokument EP 1332915 B1 oder US 2020/0324684 A1 zeigt einen stoßabsorbierenden Fahrzeugscheinwerfer gemäß dem Stand der Technik.

Nachteiligerweise kommt es durch die federnde Halterung des Scheinwerfergehäuses zu unerwünschten Bewegungen des Scheinwerfergehäuses bereits während einem normalen Fahrbetrieb. Insbesondere können Erschütterungen, die beim normalen Fahrbetrieb auftreten, zu einer unerwünschten Bewegung oder Verschiebung des Scheinwerfergehäuses führen. Eine Erhöhung der Steifigkeit des Systems würde jedoch dem angestrebten Schutz von Fußgängern zuwiderlaufen.

Eine Aufgabe der Erfindung besteht daher darin ein stoßabsorbierendes Fahrzeugscheinwerfersystem zu schaffen, welches einen zuverlässigen Fußgängerschutz bietet und gleichzeitig eine hohe Steifigkeit aufweist.

Diese Aufgabe wird durch ein stoßabsorbierendes Fahrzeugscheinwerfersystem mit den Merkmalen von Anspruch 1 gelöst. Bevorzugte Ausführungen sind in den abhängigen Ansprüchen angegeben.

Erfindungsgemäß umfasst das Fahrzeugscheinwerfersystem
- zumindest zwei mit einem Karosserieelement, insbesondere einem Stoßfänger, eines Fahrzeuges mechanisch verbindbare Auslöseelemente, die räumlich voneinander beabstandet sind, und
- zumindest eine mit dem Fahrzeugrahmenelement zumindest teilweise verbundene Auslösemechanik, welche dazu eingerichtet ist, in Abhängigkeit von den Positionen der zumindest zwei Auslöseelemente einen Übergang zwischen einer Grundposition, in welcher das Fahrzeugscheinwerfergehäuse relativ zu dem Fahrzeugrahmenelement unverschwenkt und/oder unverschoben ist, und einer Verstellposition, in welcher das Fahrzeugscheinwerfergehäuse relativ zu dem Fahrzeugrahmenelement linear verschoben und/ oder um eine Schwenkachse verschwenkt ist, freizugeben,
wobei die zumindest eine Auslösemechanik Folgendes umfasst:
* ein Blockierelement, welches linear verschiebbar in der zumindest einen Auslösemechanik gehalten ist, wobei das Blockierelement dazu eingerichtet ist, in Abhängigkeit von den Positionen der Auslöseelemente zwischen einer Blockierposition und einer Freigabeposition zu wechseln, wobei in der Blockierposition ein Eingriffsabschnitt des Blockierelements in einen korrespondierenden Eingriffsabschnitt des Fahrzeugrahmenelements eingreift, um das Fahrzeugscheinwerfergehäuses in der Grundposition zu halten, wobei in der Freigabeposition der Eingriffsabschnitt des Blockierelements außerhalb des korrespondierenden Eingriffsabschnitts des Fahrzeugrahmenelements angeordnet ist, um einen Übergang des Fahrzeugscheinwerfergehäuses von der Grundposition in die Verstellposition freizugeben, wobei ein erstes Federelement vorgesehen ist, welches auf das Blockierelement eine dieses in die Blockierposition drückende erste Federkraft ausübt,
* eine Kraftübertragungsvorrichtung, welche das Blockierelement mit den zumindest zwei Auslöseelementen mechanisch koppelt, wobei die Kraftübertragungsvorrichtung zumindest eine Drehwelle und ein Ansteuerelement umfasst, wobei die zumindest zwei Auslöseelemente mit der zumindest einen Drehwelle derart mechanisch gekoppelt sind, dass eine individuelle Verschiebung von jedem der zumindest zwei Auslöseelemente in eine Drehbewegung der zumindest einen Drehwelle umsetzbar ist, wobei das Ansteuerelement mit der zumindest einen Drehwelle derart mechanisch gekoppelt ist, dass eine Drehbewegung der zumindest einen Drehwelle in eine Drehbewegung des Ansteuerelements umsetzbar ist, wobei das Ansteuerelement mit dem Blockierelement derart wirkverbunden ist, dass mittels einer Drehbewegung des Ansteuerelements das Blockierelement entgegen der ersten Federkraft des ersten Federelements in die Freigabeposition drückbar ist.

Dadurch ergibt sich der Vorteil, dass bei normalem Fahrbetrieb das Fahrzeugscheinwerfergehäuse durch das Blockierelement in der Grundposition gehalten wird und damit das Fahrzeugscheinwerfergehäuse im Wesentlichen ortsfest an dem Fahrzeugrahmenelement befestigt ist, und bei einer Kollision mit einem Verkehrsteilnehmer, welche mit jedem der zumindest zwei Auslöseelementen erfassbar ist, die Auslösemechanik das Fahrzeugscheinwerfergehäuse freigibt, wodurch dieses in die Verstellposition übergehen kann, wobei bei diesem Übergang Stoßenergie aufgenommen wird. Vorteilhafterweise erfolgt die Verschiebung des Fahrzeugscheinwerfergehäuses somit erst bei einer Kollision.

Insbesondere kann vorgesehen sein, dass die zumindest zwei Auslöseelemente axial entlang einer Drehachse der zumindest einen Drehwelle zueinander beabstandet sind, und derart mit der zumindest einen Drehwelle mechanisch gekoppelt sind, dass die zumindest zwei Auslöseelemente jeweils in einem radialen Abstand von der Drehachse an der zumindest einen Drehwelle angreifen, um durch eine individuelle Verschiebung jedes der zumindest zwei Auslöseelemente eine Drehbewegung der zumindest einen Drehwelle zu induzieren. Die Verschiebung der zumindest zwei Auslöseelemente kann dabei typischerweise im Wesentlichen in Umfangsrichtung der Drehwelle, gemessen an dem Punkt, an dem das jeweilige Auslöseelement an der Drehwelle angreift, erfolgen. Wenn das Fahrzeugscheinwerfersystem an einem Fahrzeug montiert ist, ist die Verschiebung der zumindest zwei Auslöseelemente insbesondere eine Bewegung hin zur Fahrzeugmitte, sodass z.B. eine Kollision mit einem Fußgänger, die in der Regel eine Relativbewegung der Stoßstange hin zur Fahrzeugmitte zur Folge hat, mittels der Auslöseelemente erfassbar ist, wodurch der Scheinwerfer entsperrt und eine Ausweichbewegung des Fahrzeugscheinwerfergehäuses freigegeben werden kann.

Weiters kann vorgesehen sein, dass die mechanische Kopplung der zumindest zwei Auslöseelemente mit der zumindest einen Drehwelle jeweils über ein Verbindungselement erfolgt, wobei jedes Verbindungselement im Wesentlichen radial von der zumindest einen Drehwelle absteht. In einem Zustand in dem das Fahrzeugscheinwerfersystem in einem Fahrzeug eingebaut ist, zeigt das Verbindungselement vorzugsweise in eine Mittelposition, welche insbesondere senkrecht nach oben oder unten orientiert ist, hin zu dem Fahrzeugscheinwerfer. Die Mittelposition bezeichnet dabei jene Position, die in der Mitte zwischen den maximalen Endpositionen eines Arbeitsbereichs des Verbindungselements liegt. Vorzugsweise ist das Verbindungselement in der Blockierposition des Blockierelements in einer ersten Endposition und in der Freigabeposition des Blockierelements in einer zweiten Endposition, wobei während des Übergangs zwischen der Blockierposition und der Freigabeposition das Verbindungselement von der ersten Endposition in die zweite Endposition verschwenkt wird. Bei der Hälfte des dabei von dem Verbindungselement zurückgelegten Kreisbogens zeigt das Verbindungselement im Wesentlichen senkrecht nach unten oder oben, wobei dies die Mittelposition darstellt.

Insbesondere kann vorgesehen sein, dass die zumindest zwei Auslöseelemente mit dem jeweiligen Verbindungselement über eine Gelenksverbindung, vorzugsweise über ein Kugelgelenk, verbunden sind. Dadurch kann es zu einer besonders reibungsarmen Bewegungsübertragung zwischen den zumindest zwei Auslöseelementen und dem jeweiligen Verbindungselement kommen.

Weiters kann vorgesehen sein, dass in einem Zustand, in dem das stoßabsorbierende Fahrzeugscheinwerfersystem in einem Fahrzeug eingebaut ist, die zumindest eine Drehwelle im Wesentlichen in einer Horizontalebene und die Verbindungselemente im Wesentlichen in einer Vertikalebene liegen. Dadurch kann die Kraftübertragungsvorrichtung besonders kompakt ausgestaltet sein.

Insbesondere kann vorgesehen sein, dass die von den zumindest zwei Auslöseelementen induzierbare Drehbewegung der zumindest einen Drehwelle und die von der zumindest einen Drehwelle auf das Ansteuerelement umgesetzte Drehbewegung die gleiche Drehrichtung aufweisen.

Weiters kann vorgesehen sein, dass das Ansteuerelement mit der zumindest einen Drehwelle im Wesentlichen drehfest verbunden ist. Dadurch kann eine besonders effiziente Drehmomentübertragung zwischen dem Ansteuerelement und der zumindest einen Drehwelle erfolgen.

Insbesondere kann vorgesehen sein, dass die Kraftübertragungsvorrichtung zumindest zwei benachbarte Drehwellen aufweist, wobei eine erste Drehwelle und eine zweite Drehwelle jeweils mit zumindest zwei Auslöseelementen mechanisch gekoppelt sind, wobei die erste Drehwelle und die zweite Drehwelle derart zueinander orientiert sind, dass eine Drehachse der ersten Drehwelle und eine Drehachse der zweiten Drehwelle mit einem Winkel von zumindest 5°, vorzugsweise zwischen 10° und 30°, zueinander orientiert sind. Insbesondere sind die erste und zweite Drehwelle, sowie jede weitere Drehwelle, nicht koaxial zueinander angeordnet. Vorteilhafterweise können somit die Drehwellen einer Pfeilung des Fahrzeugscheinwerfergehäuses folgen. Vorzugsweise können zwei oder mehr Drehwellen innerhalb einer Ebene angeordnet sein, wobei benachbarte Drehwellen mit Winkeln von z.B. zumindest 5°, vorzugsweise zwischen 10° und 30° zueinander geneigt sind.

Weiters kann vorgesehen sein, dass zwischen benachbarten Drehwellen genau ein Ansteuerelement angeordnet ist.

Insbesondere kann vorgesehen sein, dass die das Blockierelement entgegen der ersten Federkraft des ersten Federelements in die Freigabeposition drückende Drehbewegung des Ansteuerelements eine Drehung des Ansteuerelements um mindestens 10°, vorzugsweise mindestens 20°, besonders bevorzugt mindestens 30° erfordert. Damit kann vorteilhafterweise erreicht werden, dass die Auslösung des Blockierelements erst ab einer gewissen Mindestverschiebung des Auslöseelements bzw. ab einer Mindestrotation des Ansteuerelements erfolgt. Mit anderen Worten wird insbesondere eine Mindestkrafteinwirkung auf das Auslöseelement benötigt, welche die erforderliche Mindestrotation des Ansteuerelements induziert, um die Fixierung des Fahrzeugscheinwerfergehäuse zu lösen.

Weiters kann vorgesehen sein, dass das Ansteuerelement über ein in der zumindest einen Auslösemechanik linear verschiebbar angeordnetes Entriegelungselement mit dem Blockierelement derart wirkverbunden ist, dass eine Drehbewegung des Ansteuerelements in eine lineare Verschiebung des Entriegelungselements umsetzbar ist, wobei das Entriegelungselement zum Eingriff in das Blockierelement eingerichtet ist, sodass im Eingriff die lineare Verschiebung des Entriegelungselements den Eingriffsabschnitt des Blockierelements in die Freigabeposition drückt. Das Entriegelungselement kann zu den zumindest zwei Auslöseelementen derart angeordnet sein, dass die lineare Verschiebung des Entriegelungselements und die Verschiebung der zumindest zwei Auslöseelemente in im Wesentlichen parallelen Ebenen erfolgt.

Insbesondere kann vorgesehen sein, dass das Entriegelungselement einen im Wesentlichen keilförmigen Kontaktabschnitt aufweist, welcher zum Eingriff an einem zu dem Kontaktabschnitt des Entriegelungselements komplementär ausgebildeten Kontaktabschnitt des Blockierelements eingerichtet ist, wobei während des Übergangs des Blockierelements in die Freigabeposition der Kontaktabschnitt des Entriegelungselements den Kontaktabschnitt des Blockierelements zur Kraftübertragung kontaktiert. Insbesondere gleitet der Kontaktabschnitt des Entriegelungselements während des Übergangs des Blockierelements in die Freigabeposition zumindest teilweise über den komplementär ausgebildeten Kontaktabschnitt des Blockierelements, wobei dadurch das Blockierelement aus dem korrespondierenden Eingriffsabschnitt des Fahrzeugrahmenelements gedrückt wird.

Weiters kann vorgesehen sein, dass das stoßabsorbierende Fahrzeugscheinwerfersystem zumindest zwei Auslösemechaniken aufweist, wobei eine erste Auslösemechanik an einer Oberseite des Fahrzeugscheinwerfergehäuses und eine zweite Auslösemechanik an einer gegenüberliegenden Unterseite des Fahrzeugscheinwerfergehäuses angeordnet ist, wobei ausgehend von jeder Auslösemechanik ein mit dem jeweiligen Blockierelement gekoppelter und damit gemeinsam verschiebbarer mechanischer Arm sich im Wesentlichen in Richtung der gegenüberliegenden Auslösemechanik erstreckt, wobei zwischen den beiden Auslösemechaniken eine Wippe ausgebildet ist, wobei die Arme an gegenläufigen Enden der Wippe angreifen, sodass seine Abwärtsbewegung des Armes der oberen Auslösemechanik in eine Aufwärtsbewegung des Armes der unteren Auslösemechanik umgesetzt wird, wodurch eine mechanische Auslösung der beiden Auslösemechaniken miteinander gekoppelt ist. Dadurch wird vorteilhafterweise die Anzahl an Auslöseelementen, welche die Freigabe des Fahrzeugscheinwerfergehäuses induzieren, erhöht. Somit können Kollisionen an verschiedenen Bereichen des Fahrzeugscheinwerfergehäuses erfasst werden und eine Freigabe des Fahrzeugscheinwerfergehäuses induzieren.

Insbesondere kann vorgesehen sein, dass eine Verschiebung des ersten Blockierelements beim Übergang in dessen Freigabeposition und eine damit gekoppelte Verschiebung des zweiten Blockierelements beim Übergang in dessen Freigabeposition entlang einer gegengleich, vorzugsweise antiparallel, verlaufenden Trajektorie erfolgt.

Weiters kann vorgesehen sein, dass zwischen dem Fahrzeugrahmenelement und dem Fahrzeugscheinwerfergehäuse ein zweites Federelement angeordnet ist, welches dazu eingerichtet ist, durch eine zweite Federkraft das Fahrzeugscheinwerfergehäuse in die Grundposition zu drücken, sodass der Übergang in die Verstellposition entgegen der zweiten Federkraft erfolgt. Dadurch ergibt sich der Vorteil, dass nach einer Kollision, welche eine Verschiebung des Fahrzeugscheinwerfergehäuses zur Folge hat, das Fahrzeugscheinwerfergehäuse durch die zweite Federkraft wieder zurück in die Grundposition gedrückt werden kann. Damit kann ein stoßabsorbierendes und rückstellendes Fahrzeugscheinwerfersystem bereitgestellt werden.

Insbesondere kann vorgesehen sein, dass die Führung zur Aufnahme und Führung des Führungsmittels als gerades oder kreisbogenförmiges Langloch ausgebildet ist. Vorzugsweise ist das Führungsmittel als Zapfen ausgebildet, wobei der Zapfen derart ausgestaltet ist, dass er entlang des Langlochs hin und her bewegbar ist.

Weiters betrifft die Erfindung ein Kraftfahrzeug, umfassend ein erfindungsgemäßes stoßabsorbierendes Fahrzeugscheinwerfersystem.

Die Erfindung ist im Folgenden anhand einer beispielhaften und nicht einschränkenden Ausführungsform näher erläutert, die in den Figuren veranschaulicht ist. Darin zeigt
Figur 1 eine Vorderansicht einer Ausführungsform eines erfindungsgemäßen stoßabsorbierenden Fahrzeugscheinwerfersystems;
Figur 2 eine Rückansicht des stoßabsorbierenden Fahrzeugscheinwerfersystems gemäß Fig. 1;
Figur 3 eine Detailansicht des stoßabsorbierenden Fahrzeugscheinwerfersystems gemäß Fig. 1;
Figur 4 eine weitere Detailansicht des stoßabsorbierenden Fahrzeugscheinwerfersystems gemäß Fig. 1; und die
Figuren 5a bis 5c schematische Detailansichten verschiedener Positionen des stoßabsorbierenden Fahrzeugscheinwerfersystems gemäß Fig. 1.

In den folgenden Figuren bezeichnen - sofern nicht anders angegeben - gleiche Bezugszeichen gleiche Merkmale.

Sämtliche Figuren sind schematische und vereinfachte Darstellungen der Erfindung, wobei nicht wesentliche Komponenten zur besseren Übersicht nicht dargestellt sind.

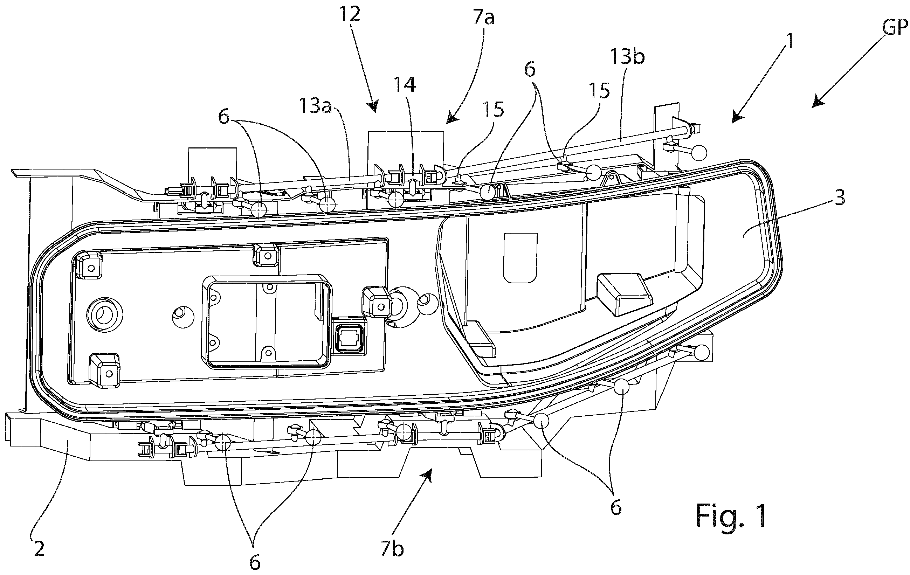

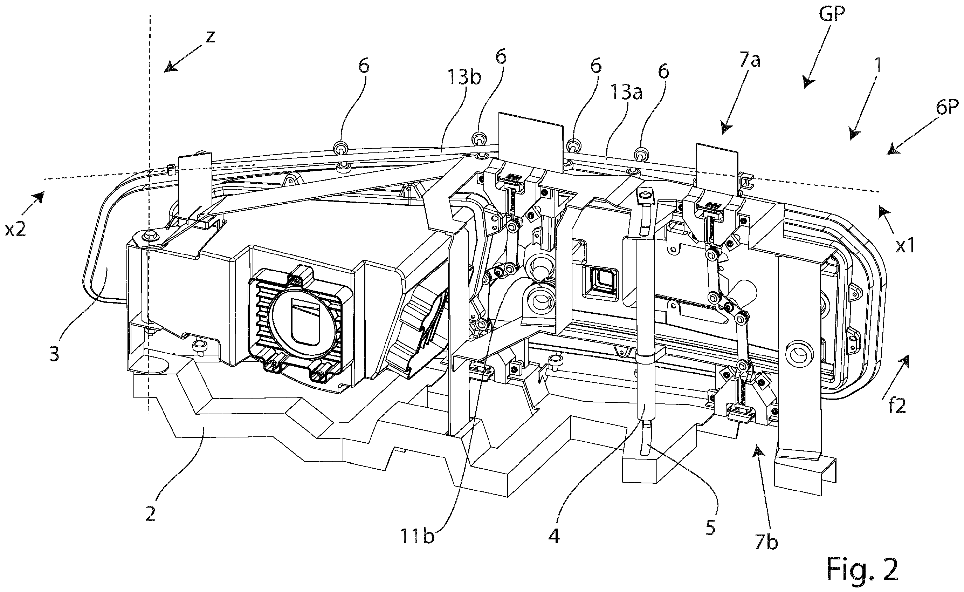

**Figur 1** zeigt eine Vorderansicht und **Figur 2** eine Rückansicht einer Ausführungsform eines erfindungsgemäßen stoßabsorbierenden Fahrzeugscheinwerfersystems 1, mit zumindest einem mit einem Fahrzeug fest verbindbaren Fahrzeugrahmenelement 2 und einem an dem Fahrzeugrahmenelement 2 verschwenkbar und/oder verschiebbar gehaltenen Fahrzeugscheinwerfergehäuse 3.

Das Fahrzeugscheinwerfergehäuse 3 ist mit einem Führungsmittel 4, vorzugsweise fest, verbunden. Das Fahrzeugrahmenelement 2 weist zumindest eine Führung 5 zur Aufnahme und Führung des Führungsmittels 4 auf, wobei das Führungsmittel 4 mit der Führung 5 in Eingriff steht, sodass das Fahrzeugscheinwerfergehäuse 3 durch Verschiebung des Führungsmittels 4 entlang der Führung 5 geführt und dadurch in Bezug auf das Fahrzeugrahmenelement 2 verschwenkbar und/oder verschiebbar ist. In dem gezeigten Ausführungsbeispiel ist die Führung 5 als kreisbogenförmiges Langloch ausgebildet.

Das Fahrzeugscheinwerfersystem 1 umfasst weiters zumindest zwei mit einem Karosserieelement, insbesondere einem Stoßfänger, eines Fahrzeuges mechanisch verbindbare Auslöseelemente 6, die räumlich voneinander beabstandet sind. In einem Zustand, in dem das Fahrzeugscheinwerfersystem 1 in einem Fahrzeug eingebaut ist und die Auslöseelemente 6 mit einem Stoßfänger verbunden sind, führt eine durch eine Kollision des Fahrzeugs (beispielsweise mit einem Fußgänger) auslösbare Verschiebung des Stoßfängers hin zur Fahrzeugmitte zu einer Positionsänderung von zumindest einem der zumindest zwei Auslöseelemente 6, wobei in der Regel die Positionsänderung des Auslöseelements 6 bzw. der Auslöseelemente 6 ebenfalls eine Verschiebung hin zur Fahrzeugmitte ist. Je nachdem an welcher Stelle des Stoßfängers ein Aufprall bzw. eine Kollision erfolgt, wird ein entsprechendes (oder mehrere) Auslöseelement 6 verschoben bzw. bewegt.

Die Auslöseelemente 6 sind mit einer weiter unten im Detail beschriebenen Auslösemechanik 7a, 7b verbunden, wobei diese mit dem Fahrzeugrahmenelement 2 zumindest teilweise verbunden ist. Die Auslösemechanik 7a, 7b ist dazu eingerichtet, in Abhängigkeit von den Positionen der zumindest zwei Auslöseelemente 6 einen Übergang zwischen einer Grundposition GP, in welcher das Fahrzeugscheinwerfergehäuse 3 relativ zu dem Fahrzeugrahmenelement 2 unverschwenkt und/oder unverschoben ist, und einer Verstellposition VP, in welcher das Fahrzeugscheinwerfergehäuse 3 relativ zu dem Fahrzeugrahmenelement 2 linear verschoben und/ oder um eine Schwenkachse z verschwenkt ist, freizugeben. Die Verstellposition VP wird somit im Zuge einer Kollision eingenommen, wobei beim Übergang in die Verstellposition VP Aufprallenergie aufgenommen wird. Die Grundposition GP liegt bei normaler, kollisionsfreier, Fahrt vor, wobei in der Grundposition GP das Fahrzeugscheinwerfergehäuse 3 an dem Fahrzeugrahmenelement 2 fixiert bzw. ortsfest gehalten ist.

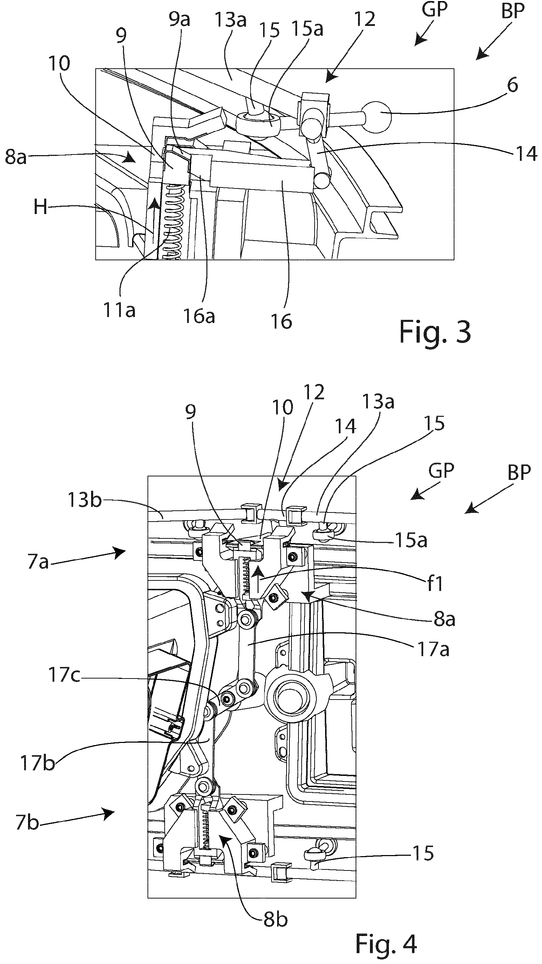

Erfindungsgemäß umfasst das Fahrzeugscheinwerfersystem 1 zumindest eine Auslösemechanik 7a, 7b. In dem gezeigten Ausführungsbeispiel weist das Fahrzeugscheinwerfersystem 1 vier, von ihrer mechanischen Wirkweise her äquivalente, Auslösemechaniken auf, wobei zwei dieser Auslösemechaniken 7a, 7b (vgl. Fig. 2 und die Detailansicht Fig. 4) mit Bezugszeichen versehen sind und nun im Detail erklärt werden.

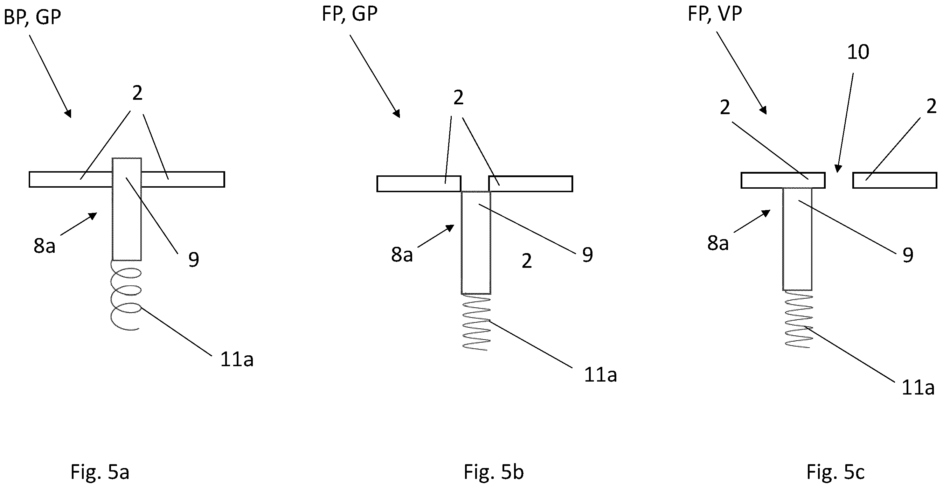

Wie in **Figur 3 und Figur 4** erkennbar, umfassen die Auslösemechaniken 7a, 7b jeweils ein Blockierelement 8a, 8b, welches linear verschiebbar in der jeweiligen Auslösemechanik 7a, 7b gehalten ist. Das Blockierelement 8a, 8b ist dazu eingerichtet, in Abhängigkeit von den Positionen der Auslöseelemente 6 zwischen einer Blockierposition BP und einer Freigabeposition FP zu wechseln. Ein erstes Federelement 11a drückt mittels der ersten Federkraft f1 das Blockierelement 8a, 8b in die Blockierposition BP, wobei in der Blockierposition BP ein Eingriffsabschnitt 9 des Blockierelements 8a, 8b in einen korrespondierenden Eingriffsabschnitt 10 des Fahrzeugrahmenelements 2 eingreift. Dadurch wird das Fahrzeugscheinwerfergehäuses 3 in der Grundposition GP gehalten. In der Freigabeposition FP (vgl. Figur 5c) wird das Blockierelement 8a, 8b bzw. dessen Eingriffsabschnitt 9 gegen die erste Federkraft f1 aus dem korrespondierenden Eingriffsabschnitt 10 des Fahrzeugrahmenelements 2 gedrückt, um einen Übergang des Fahrzeugscheinwerfergehäuses 3 von der Grundposition GP in die Verstellposition VP freizugeben. Während des Übergangs von der Grundposition GP in die Verstellposition VP bewegt sich das Führungsmittel 4 entlang der Führung 5.

Um die Auslösemechaniken 7a, 7b in Abhängigkeit von den Positionen der zumindest zwei Auslöseelemente 6 auszulösen, ist eine Kraftübertragungsvorrichtung 12 vorgesehen. Diese koppelt das Blockierelement 8a, 8b mit den zumindest zwei Auslöseelementen 6 mechanisch. Die Kraftübertragungsvorrichtung 12 umfasst zumindest eine Drehwelle 13a, 13b und ein Ansteuerelement 14, wobei die zumindest zwei Auslöseelemente 6 mit der zumindest einen Drehwelle 13a, 13b mechanisch gekoppelt sind, um eine individuelle Verschiebung von jedem der zumindest zwei Auslöseelemente 6 in eine Drehbewegung der zumindest einen Drehwelle 13a, 13b umzusetzen. In dem gezeigten Ausführungsbeispiel weist die Kraftübertragungsvorrichtung 12 zwei benachbarte Drehwellen 13a, 13b auf, wobei eine erste Drehwelle 13a und eine zweite Drehwelle 13b jeweils mit zumindest zwei Auslöseelementen 6 mechanisch gekoppelt sind. Die erste Drehwelle 13a und die zweite Drehwelle 13b sind derart zueinander orientiert, dass eine Drehachse x1 der ersten Drehwelle 13a und eine Drehachse x2 der zweiten Drehwelle 13b mit einem Winkel von zumindest 5°, vorzugsweise zwischen 10° und 30°, zueinander orientiert sind. Die Auslöseelemente 6 sind axial entlang der Drehachsen x1, x2 der Drehwellen 13a, 13b zueinander beabstandet.

Die Auslöseelemente 6 greifen jeweils in einem radialen Abstand von den Drehachsen x1, x2 an der jeweiligen Drehwelle 13a, 13b an, um durch eine individuelle Verschiebung jedes der Auslöseelemente 6 eine Drehbewegung der entsprechenden Drehwelle 13a, 13b zu induzieren. Die mechanische Kopplung der Auslöseelemente 6 mit den jeweiligen Drehwellen 13a, 13b erfolgt jeweils über ein Verbindungselement 15, wobei jedes Verbindungselement 15 im Wesentlichen radial von der zumindest einen Drehwelle 13a, 13b absteht. Die Auslöseelemente 6 sind mit dem jeweiligen Verbindungselement 15 über eine Gelenksverbindung 15a, vorzugsweise über ein Kugelgelenk, verbunden. In einem Zustand, in dem das stoßabsorbierende Fahrzeugscheinwerfersystem 1 in einem Fahrzeug eingebaut ist, liegen die Drehwellen 13a, 13b im Wesentlichen in einer Horizontalebene und die Verbindungselemente 15 im Wesentlichen in einer Vertikalebene.

Das Ansteuerelement 14 ist mit den Drehwellen 13a, 13b derart mechanisch gekoppelt, dass eine Drehbewegung von zumindest einer Drehwelle 13a, 13b in eine Drehbewegung des Ansteuerelements 14 umsetzbar ist. Zwischen benachbarten Drehwellen 13a, 13b ist in dem gezeigten Ausführungsbeispiel genau ein Ansteuerelement 14 angeordnet. Das Ansteuerelement 14 ist weiters mit dem Blockierelement 8a, 8b derart wirkverbunden, dass mittels einer Drehbewegung des Ansteuerelements 14 das Blockierelement 8a, 8b entgegen der ersten Federkraft f1 des ersten Federelements 11a in die Freigabeposition FP drückbar ist. Das Ansteuerelement 14 ist zu diesem Zweck über ein in der Auslösemechanik 7a, 7b linear verschiebbar angeordnetes Entriegelungselement 16 mit dem Blockierelement 8a, 8b wirkverbunden, sodass eine Drehbewegung des Ansteuerelements 14 in eine lineare Verschiebung des Entriegelungselements 16 umsetzbar ist. Das Entriegelungselement 16 ist wiederum zum Eingriff in das Blockierelement 8a, 8b eingerichtet, sodass im Eingriff die lineare Verschiebung des Entriegelungselements 16 den Eingriffsabschnitt 9 des Blockierelements 8a, 8b in die Freigabeposition FP drückt. Das Entriegelungselement 16 weist einen im Wesentlichen keilförmigen Kontaktabschnitt 16a auf, welcher zum Eingriff an einem zu dem Kontaktabschnitt 16a des Entriegelungselements 16 komplementär ausgebildeten Kontaktabschnitt 9a des Blockierelements 8a, 8b eingerichtet ist. Während des Übergangs des Blockierelements 8a, 8b in die Freigabeposition FP kontaktiert der Kontaktabschnitt 16a des Entriegelungselements 16 den Kontaktabschnitt 9a des Blockierelements 8a, 8b zur Kraftübertragung.

Die das Blockierelement 8a, 8b entgegen der ersten Federkraft f1 des ersten Federelements 11a in die Freigabeposition FP drückende Drehbewegung des Ansteuerelements 14 erfordert eine Drehung des Ansteuerelements 14 um mindestens 10°, vorzugsweise mindestens 20°, besonders bevorzugt mindestens 30°.

**Figur 4** zeigt eine weitere Detailansicht, wobei eine erste Auslösemechanik 7a an einer Oberseite des Fahrzeugscheinwerfergehäuses 3 und eine zweite Auslösemechanik 7b an einer gegenüberliegenden Unterseite des Fahrzeugscheinwerfergehäuses 3 angeordnet ist. Ausgehend von jeder Auslösemechanik 7a, 7b erstreckt sich ein mit dem jeweiligen Blockierelement 8a, 8b gekoppelter und damit gemeinsam verschiebbarer mechanischer Arm 17a, 17b im Wesentlichen in Richtung der gegenüberliegenden Auslösemechanik 7a, 7b. Zwischen den beiden Auslösemechaniken 7a, 7b ist eine Wippe 17c ausgebildet, wobei die Arme 17a, 17b an gegenläufigen Enden der Wippe 17c angreifen, sodass eine Abwärtsbewegung des Armes 17a der oberen Auslösemechanik 7a in eine Aufwärtsbewegung des Armes 17b der unteren Auslösemechanik 7b umgesetzt wird. Dadurch ist eine mechanische Auslösung der beiden Auslösemechaniken 7a, 7b miteinander gekoppelt.

Eine Verschiebung des ersten Blockierelements 8a beim Übergang in dessen Freigabeposition und eine damit gekoppelte Verschiebung des zweiten Blockierelements 8b beim Übergang in dessen Freigabeposition erfolgt entlang einer gegengleich, vorzugsweise antiparallel, verlaufenden Trajektorie.

Um das Fahrzeugscheinwerfergehäuse 3 nach einer Kollision zurück in die Grundposition GP zu drücken, ist zwischen dem Fahrzeugrahmenelement 2 und dem Fahrzeugscheinwerfergehäuse 3 ein zweites Federelement 11b angeordnet, welches eine zweite Federkraft f2 ausübt. Die Verschiebung des Fahrzeugscheinwerfergehäuses 3 in die Verstellposition VP erfolgt somit gegen die zweite Federkraft f2.

Die Erfindung ist nicht auf die gezeigten Ausführungsformen beschränkt, sondern durch den gesamten Schutzumfang der Ansprüche definiert. Auch können einzelne Aspekte der Erfindung bzw. der Ausführungsformen aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

Die **Figur 5a** zeigt eine stark vereinfachte schematische Detailansicht des Fahrzeugscheinwerfersystems 1 in der Blockierposition BP und der Grundposition GP. Der Eingriffsabschnitt 9 des Blockierelements 8a greift in den korrespondierenden Eingriffsabschnitt 10 des Fahrzeugrahmenelements 2 ein.

Die **Figur 5b** zeigt eine stark vereinfachte schematische Detailansicht des Fahrzeugscheinwerfersystems 1 in der Freigabeposition FP und der Grundposition GP. Der Eingriffsabschnitt 9 des Blockierelements 8a ist außerhalb des korrespondierenden Eingriffsabschnitts 10 des Fahrzeugrahmenelements 2.

Die **Figur 5c** zeigt eine stark vereinfachte schematische Detailansicht des Fahrzeugscheinwerfersystems 1 in der Freigabeposition FP und der Verstellposition VP. Der Eingriffsabschnitt 9 des Blockierelements 8a ist außerhalb des korrespondierenden Eingriffsabschnitts 10 des Fahrzeugrahmenelements 2. Zusätzlich ist das Fahrzeugscheinwerfergehäuse 3 relativ zu dem Fahrzeugrahmenelement 2 verschoben, wobei dieser Verschiebung durch eine Verschiebung des Blockierelements 8a nach links angedeutet ist.

## Patentansprüche

1. Stoßabsorbierendes Fahrzeugscheinwerfersystem (1), aufweisend
- zumindest ein mit einem Fahrzeug fest verbindbares Fahrzeugrahmenelement (2),
- ein an dem Fahrzeugrahmenelement (2) verschwenkbar und/oder verschiebbar gehaltenes Fahrzeugscheinwerfergehäuse (3) mit zumindest einem mit dem Fahrzeugscheinwerfergehäuse (3) verbundenen Führungsmittel (4), welches vorzugsweise fest mit dem Fahrzeugscheinwerfergehäuse (3) verbunden ist, wobei das Fahrzeugrahmenelement (2) zumindest eine Führung (5) zur Aufnahme und Führung des Führungsmittels (4) aufweist, wobei das Führungsmittel (4) mit der Führung (5) in Eingriff steht, sodass das Fahrzeugscheinwerfergehäuse (3) durch Verschiebung des Führungsmittels (4) entlang der Führung (5) geführt und dadurch in Bezug auf das Fahrzeugrahmenelement (2) um eine Schwenkachse (z) verschwenkbar und/oder verschiebbar ist, **gekennzeichnet durch**
- zumindest zwei mit einem Karosserieelement, insbesondere einem Stoßfänger, eines Fahrzeuges mechanisch verbindbare Auslöseelemente (6), die räumlich voneinander beabstandet sind, und
- zumindest eine mit dem Fahrzeugrahmenelement (2) zumindest teilweise verbundene Auslösemechanik (7a, 7b), welche dazu eingerichtet ist, in Abhängigkeit von den Positionen der zumindest zwei Auslöseelemente (6) einen Übergang zwischen einer Grundposition (GP), in welcher das Fahrzeugscheinwerfergehäuse (3) relativ zu dem Fahrzeugrahmenelement (2) unverschwenkt und/oder unverschoben ist, und einer Verstellposition (VP), in welcher das Fahrzeugscheinwerfergehäuse (3) relativ zu dem Fahrzeugrahmenelement (2) linear verschoben und/oder um die Schwenkachse (z) verschwenkt ist, freizugeben,
wobei die zumindest eine Auslösemechanik (7a, 7b) Folgendes umfasst:
* ein Blockierelement (8a, 8b), welches linear verschiebbar in der zumindest einen Auslösemechanik (7a, 7b) gehalten ist, wobei das Blockierelement (8a, 8b) dazu eingerichtet ist, in Abhängigkeit von den Positionen der Auslöseelemente (6) zwischen einer Blockierposition (BP) und einer Freigabeposition (FP) zu wechseln, wobei in der Blockierposition (BP) ein Eingriffsabschnitt (9) des Blockierelements (8a, 8b) in einen korrespondierenden Eingriffsabschnitt (10) des Fahrzeugrahmenelements (2) eingreift, um das Fahrzeugscheinwerfergehäuses (3) in der Grundposition (GP) zu halten, wobei in der Freigabeposition (FP) der Eingriffsabschnitt (9) des Blockierelements (8a, 8b) außerhalb des korrespondierenden Eingriffsabschnitts (10) des Fahrzeugrahmenelements (2) angeordnet ist, um einen Übergang des Fahrzeugscheinwerfergehäuses (3) von der Grundposition (GP) in die Verstellposition (VP) freizugeben, wobei ein erstes Federelement (11a) vorgesehen ist, welches auf das Blockierelement (8a, 8b) eine dieses in die Blockierposition (BP) drückende erste Federkraft (f1) ausübt,
* eine Kraftübertragungsvorrichtung (12), welche das Blockierelement (8a, 8b) mit den zumindest zwei Auslöseelementen (6) mechanisch koppelt, wobei die Kraftübertragungsvorrichtung (12) zumindest eine Drehwelle (13a, 13b) und ein Ansteuerelement (14) umfasst, wobei die zumindest zwei Auslöseelemente (6) mit der zumindest einen Drehwelle (13a, 13b) derart mechanisch gekoppelt sind, dass eine individuelle Verschiebung von jedem der zumindest zwei Auslöseelemente (6) in eine Drehbewegung der zumindest einen Drehwelle (13a, 13b) umsetzbar ist, wobei das Ansteuerelement (14) mit der zumindest einen Drehwelle (13a, 13b) derart mechanisch gekoppelt ist, dass eine Drehbewegung der zumindest einen Drehwelle (13a, 13b) in eine Drehbewegung des Ansteuerelements (14) umsetzbar ist, wobei das Ansteuerelement (14) mit dem Blockierelement (8a, 8b) derart wirkverbunden ist, dass mittels einer Drehbewegung des Ansteuerelements (14) das Blockierelement (8a, 8b) entgegen der ersten Federkraft (f1) des ersten Federelements (11a) in die Freigabeposition (FP) drückbar ist.

2. Stoßabsorbierendes Fahrzeugscheinwerfersystem (1) nach Anspruch 1, wobei die zumindest zwei Auslöseelemente (6) axial entlang einer Drehachse (x1, x2) der zumindest einen Drehwelle (13a, 13b) zueinander beabstandet sind, und derart mit der zumindest einen Drehwelle (13a, 13b) mechanisch gekoppelt sind, dass die zumindest zwei Auslöseelemente (6) jeweils in einem radialen Abstand von der Drehachse (x1, x2) an der zumindest einen Drehwelle (13a, 13b) angreifen, um durch eine individuelle Verschiebung jedes der zumindest zwei Auslöseelemente (6) eine Drehbewegung der zumindest einen Drehwelle (13a, 13b) zu induzieren.

3. Stoßabsorbierendes Fahrzeugscheinwerfersystem (1) nach einem der vorhergehenden Ansprüche, wobei die mechanische Kopplung der zumindest zwei Auslöseelemente (6) mit der zumindest einen Drehwelle (13a, 13b) jeweils über ein Verbindungselement (15) erfolgt, wobei jedes Verbindungselement (15) im Wesentlichen radial von der zumindest einen Drehwelle (13a, 13b) absteht.

4. Stoßabsorbierendes Fahrzeugscheinwerfersystem (1) nach Anspruch 3, wobei die zumindest zwei Auslöseelemente (6) mit dem jeweiligen Verbindungselement (15) über eine Gelenksverbindung (15a), vorzugsweise über ein Kugelgelenk, verbunden sind.

5. Stoßabsorbierendes Fahrzeugscheinwerfersystem (1) nach Anspruch 3 oder 4, wobei in einem Zustand, in dem das stoßabsorbierende Fahrzeugscheinwerfersystem (1) in einem Fahrzeug eingebaut ist, die zumindest eine Drehwelle (13a, 13b) im Wesentlichen in einer Horizontalebene und die Verbindungselemente (15) im Wesentlichen in einer Vertikalebene liegen.

6. Stoßabsorbierendes Fahrzeugscheinwerfersystem (1) nach einem der vorhergehenden Ansprüche, wobei die von den zumindest zwei Auslöseelementen (6) induzierbare Drehbewegung der zumindest einen Drehwelle (13a, 13b) und die von der zumindest einen Drehwelle (13a, 13b) auf das Ansteuerelement (14) umgesetzte Drehbewegung die gleiche Drehrichtung aufweisen.

7. Stoßabsorbierendes Fahrzeugscheinwerfersystem (1) nach einem der vorhergehenden Ansprüche, wobei das Ansteuerelement (14) mit der zumindest einen Drehwelle (13a, 13b) im Wesentlichen drehfest verbunden ist.

8. Stoßabsorbierendes Fahrzeugscheinwerfersystem (1) nach einem der vorhergehenden Ansprüche, wobei die Kraftübertragungsvorrichtung (12) zumindest zwei benachbarte Drehwellen (13a, 13b) aufweist, wobei eine erste Drehwelle (13a) und eine zweite Drehwelle (13b) jeweils mit zumindest zwei Auslöseelementen (6) mechanisch gekoppelt sind, wobei die erste Drehwelle (13a) und die zweite Drehwelle (13b) derart zueinander orientiert sind, dass eine Drehachse (x1) der ersten Drehwelle (13a) und eine Drehachse (x2) der zweiten Drehwelle (13b) mit einem Winkel von zumindest 5°, vorzugsweise zwischen 10° und 30°, zueinander orientiert sind, wobei vorzugsweise zwischen benachbarten Drehwellen (13a, 13b) genau ein Ansteuerelement (14) angeordnet ist.

9. Stoßabsorbierendes Fahrzeugscheinwerfersystem (1) nach einem der vorhergehenden Ansprüche, wobei die das Blockierelement (8a, 8b) entgegen der ersten Federkraft (f1) des ersten Federelements (11a) in die Freigabeposition (FP) drückende Drehbewegung des Ansteuerelements (14) eine Drehung des Ansteuerelements (14) um mindestens 10°, vorzugsweise mindestens 20°, besonders bevorzugt mindestens 30° erfordert.

10. Stoßabsorbierendes Fahrzeugscheinwerfersystem (1) nach einem der vorhergehenden Ansprüche, wobei das Ansteuerelement (14) über ein in der zumindest einen Auslösemechanik (7a, 7b) linear verschiebbar angeordnetes Entriegelungselement (16) mit dem Blockierelement (8a, 8b) derart wirkverbunden ist, dass eine Drehbewegung des Ansteuerelements (14) in eine lineare Verschiebung des Entriegelungselements (16) umsetzbar ist, wobei das Entriegelungselement (16) zum Eingriff in das Blockierelement (8a, 8b) eingerichtet ist, sodass im Eingriff die lineare Verschiebung des Entriegelungselements (16) den Eingriffsabschnitt (9) des Blockierelements (8a, 8b) in die Freigabeposition (FP) drückt.

11. Stoßabsorbierendes Fahrzeugscheinwerfersystem nach Anspruch 10, wobei das Entriegelungselement (16) einen im Wesentlichen keilförmigen Kontaktabschnitt (16a) aufweist, welcher zum Eingriff an einem zu dem Kontaktabschnitt (16a) des Entriegelungselements (16) komplementär ausgebildeten Kontaktabschnitt (9a) des Blockierelements (8a, 8b) eingerichtet ist, wobei während des Übergangs des Blockierelements (8a, 8b) in die Freigabeposition (FP) der Kontaktabschnitt (16a) des Entriegelungselements (16) den Kontaktabschnitt (9a) des Blockierelements (8a, 8b) zur Kraftübertragung kontaktiert.

12. Stoßabsorbierendes Fahrzeugscheinwerfersystem nach einem der vorhergehenden Ansprüche, wobei das stoßabsorbierende Fahrzeugscheinwerfersystem (1) zumindest zwei Auslösemechaniken (7a, 7b) aufweist, wobei eine erste Auslösemechanik (7a) an einer Oberseite des Fahrzeugscheinwerfergehäuses (3) und eine zweite Auslösemechanik (7b) an einer gegenüberliegenden Unterseite des Fahrzeugscheinwerfergehäuses (3) angeordnet ist, wobei ausgehend von jeder Auslösemechanik (7a, 7b) ein mit dem jeweiligen Blockierelement (8a, 8b) gekoppelter und damit gemeinsam verschiebbarer mechanischer Arm (17a, 17b) sich im Wesentlichen in Richtung der gegenüberliegenden Auslösemechanik (7a, 7b) erstreckt, wobei zwischen den beiden Auslösemechaniken (7a, 7b) eine Wippe (17c) ausgebildet ist, wobei die Arme (17a, 17b) an gegenläufigen Enden der Wippe (17c) angreifen, sodass seine Abwärtsbewegung des Armes (17a) der oberen Auslösemechanik (7a) in eine Aufwärtsbewegung des Armes (17b) der unteren Auslösemechanik (7b) umgesetzt wird, wodurch eine mechanische Auslösung der beiden Auslösemechaniken (7a, 7b) miteinander gekoppelt ist, wobei vorzugsweise eine Verschiebung des ersten Blockierelements (8a) beim Übergang in dessen Freigabeposition und eine damit gekoppelte Verschiebung des zweiten Blockierelements (8b) beim Übergang in dessen Freigabeposition entlang einer gegengleich, vorzugsweise antiparallel, verlaufenden Trajektorie erfolgt.

13. Stoßabsorbierendes Fahrzeugscheinwerfersystem (1) nach einem der vorhergehenden Ansprüche, wobei zwischen dem Fahrzeugrahmenelement (2) und dem Fahrzeugscheinwerfergehäuse (3) ein zweites Federelement (11b) angeordnet ist, welches dazu eingerichtet ist, durch eine zweite Federkraft (f2) das Fahrzeugscheinwerfergehäuse (3) in die Grundposition (GP) zu drücken, sodass der Übergang in die Verstellposition (VP) entgegen der zweiten Federkraft (f2) erfolgt.

14. Stoßabsorbierendes Fahrzeugscheinwerfersystem (1) nach einem der vorhergehenden Ansprüche, wobei die Führung (5) zur Aufnahme und Führung des Führungsmittels (4) als gerades oder kreisbogenförmiges Langloch ausgebildet ist.

15. Kraftfahrzeug, umfassend ein stoßabsorbierendes Fahrzeugscheinwerfersystem nach einem der vorhergehenden Ansprüche.

## Claims

1. Impact-absorbing vehicle headlamp system (1), comprising
- at least one vehicle frame element (2) firmly connectable to a vehicle
- a vehicle headlamp housing (3) which is held pivotably and/or displaceably on the vehicle frame element (2) and comprises at least one guide means (4) which is connected to the vehicle headlamp housing (3) and is preferably firmly connected to the vehicle headlamp housing (3), the vehicle frame element (2) having at least one guide (5) for receiving and guiding the guide means (4), the guide means (4) being in engagement with the guide (5), so that the vehicle headlamp housing (3) is guided along the guide (5) by displacement of the guide means (4) and thereby is pivotable and/or displaceable about a pivot axis (z) with respect to the vehicle frame element (2), **characterized by**
- at least two release elements (6) mechanically connectable to a bodywork element, in particular a bumper, of a vehicle and spatially spaced apart from one another, and
- at least one release mechanism (7a, 7b) which is at least partially connected to the vehicle frame element (2) and which is configured, as a function of the positions of the at least two release elements (6), to trigger a transition between a basic position (GP) in which the vehicle headlamp housing (3) is not pivoted and/or not displaced relative to the vehicle frame element (2), and an adjustment position (VP) in which the vehicle headlamp housing (3) is linearly displaced and/or pivoted about the pivot axis (z) relative to the vehicle frame element (2),
**wherein**
the at least one release mechanism (7a, 7b) comprises the following:
* a blocking element (8a, 8b) which is held linearly displaceably in the at least one release mechanism (7a, 7b), the blocking element (8a, 8b) being configured to change between a blocking position (BP) and a release position (FP) as a function of the positions of the release elements (6), wherein, in the blocking position (BP), an engagement section (9) of the blocking element (8a, 8b) engages in a corresponding engagement section (10) of the vehicle frame element (2), in order to hold the vehicle headlamp housing (3) in the basic position (GP), wherein in the release position (FP) the engagement section (9) of the blocking element (8a, 8b) is arranged outside the corresponding engagement section (10) of the vehicle frame element (2), in order to release a transition of the vehicle headlight housing (3) from the basic position (GP) into the adjustment position (VP), a first spring element (11a) being provided which exerts a first spring force (f1) on the blocking element (8a, 8b) which presses the latter into the blocking position (BP),
* a force transmission device (12) which mechanically couples the blocking element (8a, 8b) to the at least two release elements (6), wherein the force transmission device (12) comprises at least one rotary shaft (13a, 13b) and an actuating element (14), the at least two release elements (6) being mechanically coupled to the at least one rotary shaft (13a, 13b) in such a way that an individual displacement of each of the at least two release elements (6) can be converted into a rotary movement of the at least one rotary shaft (13a, 13b), wherein the actuating element (14) is mechanically coupled to the at least one rotary shaft (13a, 13b) in such a way that a rotary movement of the at least one rotary shaft (13a, 13b) can be converted into a rotary movement of the actuating element (14), the actuating element (14) being operatively connected to the blocking element (8a, 8b) in such a way that the blocking element (8a, 8b) can be pressed into the release position (FP) against the first spring force (f1) of the first spring element (11a) by means of a rotary movement of the actuating element (14).

2. Impact-absorbing vehicle headlamp system (1) according to claim 1, wherein the at least two release elements (6) are spaced apart axially along an axis of rotation (x1, x2) of the at least one rotary shaft (13a, 13b) and are mechanically coupled to the at least one rotary shaft (13a, 13b) in such a way that the at least two release elements (6) each act on the at least one rotary shaft (13a, 13b) at a radial distance from the axis of rotation (x1, x2) in order to induce a rotary movement of the at least one rotary shaft (13a, 13b) by an individual displacement of each of the at least two release elements (6).

3. Impact-absorbing vehicle headlamp system (1) according to any of the preceding claims, wherein the mechanical coupling of the at least two release elements (6) with the at least one rotary shaft (13a, 13b) takes place in each case via a connecting element (15), wherein each connecting element (15) projects substantially radially from the at least one rotary shaft (13a, 13b).

4. Impact-absorbing vehicle headlamp system (1) according to claim 3, wherein the at least two release elements (6) are connected to the respective connecting element (15) via an articulated connection (15a), preferably via a ball joint.

5. Impact-absorbing vehicle headlamp system (1) according to claim 3 or 4, wherein, in a state in which the impact-absorbing vehicle headlamp system (1) is installed in a vehicle, the at least one rotary shaft (13a, 13b) lies essentially in a horizontal plane and the connecting elements (15) lie essentially in a vertical plane.

6. Impact-absorbing vehicle headlamp system (1) according to any of the preceding claims, wherein the rotational movement of the at least one rotary shaft (13a, 13b), which can be induced by the at least two release elements (6), and the rotational movement transferred from the at least one rotary shaft (13a, 13b) to the actuating element (14) have the same direction of rotation.

7. Impact-absorbing vehicle headlamp system (1) according to any of the preceding claims, wherein the actuating element (14) is connected to the at least one rotary shaft (13a, 13b) in a substantially rotationally fixed manner.

8. Impact-absorbing vehicle headlamp system (1) according to any of the preceding claims, wherein the force transmission device (12) comprises at least two adjacent rotary shafts (13a, 13b), wherein a first rotary shaft (13a) and a second rotary shaft (13b) are each mechanically coupled to at least two release elements (6), wherein the first rotary shaft (13a) and the second rotary shaft (13b) are oriented with respect to each other in such a way that an axis of rotation (x1) of the first rotary shaft (13a) and an axis of rotation (x2) of the second rotary shaft (13b) are oriented with respect to each other at an angle of at least 5°, preferably between 10° and 30°, wherein preferably exactly one actuating element (14) is arranged between adjacent rotary shafts (13a, 13b).

9. Impact-absorbing vehicle headlamp system (1) according to any of the preceding claims, wherein the rotational movement of the actuating element (14), which pushes the blocking element (8a, 8b) into the release position (FP) against the first spring force (f1) of the first spring element (11a), requires a rotation of the actuating element (14) by at least 10°, preferably at least 20°, particularly preferably at least 30°.

10. Impact-absorbing vehicle headlamp system (1) according to any of the preceding claims, wherein the actuating element (14) is operatively connected to the blocking element (8a, 8b) via an unlocking element (16) arranged linearly displaceably in the at least one release mechanism (7a, 7b) in such a way that a rotary movement of the actuating element (14) can be converted into a linear displacement of the unlocking element (16), wherein the unlocking element (16) is configured for engagement in the blocking element (8a, 8b), so that in the engagement the linear displacement of the unlocking element (16) presses the engagement section (9) of the blocking element (8a, 8b) into the release position (FP).

11. Impact-absorbing vehicle headlamp system according to claim 10, wherein the unlocking element (16) comprises a substantially wedge-shaped contact portion (16a) which is arranged to engage with a contact portion (9a) of the blocking element (8a, 8b), wherein during the transition of the blocking element (8a, 8b) into the release position (FP) the contact section (16a) of the unlocking element (16) contacts the contact section (9a) of the blocking element (8a, 8b) for force transmission.

12. Impact-absorbing vehicle headlamp system according to any of the preceding claims, wherein the impact-absorbing vehicle headlamp system (1) comprisees at least two release mechanisms (7a, 7b), wherein a first release mechanism (7a) is arranged on an upper side of the vehicle headlamp housing (3) and a second release mechanism (7b) is arranged on an opposite lower side of the vehicle headlamp housing (3), wherein, starting from each release mechanism (7a, 7b), a mechanical arm (17a, 17b) coupled to the respective blocking element (8a, 8b) and jointly displaceable therewith extends substantially in the direction of the opposite release mechanism (7a, 7b), wherein between the two release mechanisms (7a, 7b), a rocker (17c) being formed between the two release mechanisms (7a, 7b), the arms (17a, 17b) engaging at opposite ends of the rocker (17c), so that its downward movement of the arm (17a) of the upper release mechanism (7a) is converted into an upward movement of the arm (17b) of the lower release mechanism (7b), whereby a mechanical release of the two release mechanisms (7a, 7b) is coupled to one another, whereby preferably a displacement of the first blocking element (8a) during the transition to its release position and a displacement of the second blocking element (8b) coupled thereto during the transition to its release position takes place along a trajectory running in the opposite direction, preferably antiparallel.

13. Impact-absorbing vehicle headlamp system (1) according to any of the preceding claims, wherein a second spring element (11b) is arranged between the vehicle frame element (2) and the vehicle headlamp housing (3), which is configured to press the vehicle headlamp housing (3) into the basic position (GP) by means of a second spring force (f2), so that the transition into the adjustment position (VP) takes place counter to the second spring force (f2).

14. Impact-absorbing vehicle headlamp system (1) according to any of the preceding claims, wherein the guide (5) for receiving and guiding the guide means (4) is designed as a straight or circular arc-shaped slotted hole.

15. Motor vehicle, comprising a shock-absorbing vehicle headlamp system according to any of the preceding claims.

## Revendications

1. Système de projecteur de véhicule absorbant les chocs (1), comprenant
- au moins un élément de châssis de véhicule (2) pouvant être relié de manière fixe à un véhicule,
- un boîtier de projecteur de véhicule (3) maintenu de manière pivotante et/ou coulissante sur l'élément de châssis de véhicule (2) avec au moins un moyen de guidage (4) relié au boîtier de projecteur de véhicule (3), lequel est de préférence relié de manière fixe au boîtier de projecteur de véhicule (3), l'élément de châssis de véhicule (2) présentant au moins un guide (5) pour recevoir et guider le moyen de guidage (4), le moyen de guidage (4) étant en prise avec le guide (5), de sorte que le boîtier de projecteur de véhicule (3) est guidé par déplacement du moyen de guidage (4) le long du guide (5) et peut ainsi être pivoté et/ou déplacé par rapport à l'élément de châssis de véhicule (2) autour d'un axe de pivotement (z), **caractérisé par**
- au moins deux éléments de déclenchement (6) pouvant être reliés mécaniquement à un élément de carrosserie, en particulier à un pare-chocs, d'un véhicule, qui sont espacés l'un de l'autre dans l'espace, et
- au moins un mécanisme de déclenchement (7a, 7b) relié au moins partiellement à l'élément de châssis de véhicule (2), qui est conçu pour déclencher, en fonction des positions des au moins deux éléments de déclenchement (6), une transition entre une position de base (GP), dans laquelle le boîtier de projecteur de véhicule (3) est non pivoté et/ou non déplacé par rapport à l'élément de châssis de véhicule (2), et une position de réglage (VP) dans laquelle le boîtier de projecteur de véhicule (3) est déplacé linéairement par rapport à l'élément de châssis de véhicule (2) et/ou pivoté autour de l'axe de pivotement (z),
**dans lequel**
le au moins un mécanisme de déclenchement (7a, 7b) comprend :
* un élément de blocage (8a, 8b) qui est maintenu de manière à pouvoir être déplacé linéairement dans le au moins un mécanisme de déclenchement (7a, 7b), l'élément de blocage (8a, 8b) étant conçu pour passer entre une position de blocage (BP) et une position de libération (FP) en fonction des positions des éléments de déclenchement (6), où, dans la position de blocage (BP), une section d'engagement (9) de l'élément de blocage (8a, 8b) s'engage dans une section d'engagement correspondante (10) de l'élément de châssis de véhicule (2), pour maintenir le boîtier de projecteur de véhicule (3) dans la position de base (GP), dans laquelle, dans la position de libération (FP), la section d'engagement (9) de l'élément de blocage (8a, 8b) est située à l'extérieur de la partie d'engagement correspondante (10) de l'élément de châssis de véhicule (2), pour libérer un passage du boîtier de projecteur de véhicule (3) de la position de base (GP) à la position de réglage (VP), un premier élément de ressort (11a) étant prévu, lequel exerce sur l'élément de blocage (8a, 8b) une première force de ressort (f1) poussant celui-ci dans la position de blocage (BP),
* un dispositif de transmission de force (12) qui couple mécaniquement l'élément de blocage (8a, 8b) aux au moins deux éléments de déclenchement (6), le dispositif de transmission de force (12) comprenant au moins un arbre rotatif (13a, 13b) et un élément de commande (14), les au moins deux éléments de déclenchement (6) étant couplés mécaniquement à l'au moins un arbre rotatif (13a, 13b) de telle sorte qu'un déplacement individuel de chacun des au moins deux éléments de déclenchement (6) se transforme en un mouvement de rotation de l'au moins un arbre rotatif (13a, 13b), l'élément de commande (14) étant couplé mécaniquement à l'au moins un arbre rotatif (13a, 13b) de telle sorte qu'un mouvement de rotation de l'au moins un arbre rotatif (13a, 13b) peut être converti en un mouvement de rotation de l'élément de commande (14), l'élément de commande (14) étant en liaison active avec l'élément de blocage (8a, 8b) de telle sorte qu'au moyen d'un mouvement de rotation de l'élément de commande (14), l'élément de blocage (8a, 8b) peut être poussé dans la position de libération (FP) à l'encontre de la première force élastique (f1) du premier élément de ressort (11a).

2. Système de projecteur de véhicule à absorption de chocs (1) selon la revendication 1, dans lequel les au moins deux éléments de déclenchement (6) sont espacés axialement le long d'un axe de rotation (x1, x2) de l'au moins un arbre rotatif (13a, 13b), et sont couplés mécaniquement à l'au moins un arbre rotatif (13a, 13b) de telle sorte, que les au moins deux éléments de déclenchement (6) s'engagent chacun à une distance radiale de l'axe de rotation (x1, x2) sur le au moins un arbre rotatif (13a, 13b) pour induire un mouvement de rotation du au moins un arbre rotatif (13a, 13b) par un déplacement individuel de chacun des au moins deux éléments de déclenchement (6).

3. Système de projecteur de véhicule à absorption de chocs (1) selon l'une quelconque des revendications précédentes, dans lequel le couplage mécanique des au moins deux éléments de déclenchement (6) avec l'au moins un arbre rotatif (13a, 13b) est réalisé respectivement par l'intermédiaire d'un élément de liaison (15), chaque élément de liaison (15) faisant saillie sensiblement radialement de l'au moins un arbre rotatif (13a, 13b).

4. Système de projecteur de véhicule à absorption de chocs (1) selon la revendication 3, dans lequel les au moins deux éléments de déclenchement (6) sont reliés à l'élément de liaison (15) respectif par une liaison articulée (15a), de préférence par une articulation à rotule.

5. Système de projecteur de véhicule à absorption de chocs (1) selon la revendication 3 ou 4, dans lequel, dans un état dans lequel le système de projecteur de véhicule à absorption de chocs (1) est monté dans un véhicule, ledit au moins un arbre rotatif (13a, 13b) est sensiblement dans un plan horizontal et lesdits éléments de liaison (15) sont sensiblement dans un plan vertical.

6. Système de projecteur de véhicule à absorption de chocs (1) selon l'une quelconque des revendications précédentes, dans lequel le mouvement de rotation dudit au moins un arbre rotatif (13a, 13b) pouvant être induit par lesdits au moins deux éléments de déclenchement (6) et le mouvement de rotation converti par ledit au moins un arbre rotatif (13a, 13b) sur l'élément de commande (14) ont le même sens de rotation.

7. Système de projecteur de véhicule à absorption de chocs (1) selon l'une quelconque des revendications précédentes, dans lequel l'élément de commande (14) est sensiblement solidaire en rotation dudit au moins un arbre rotatif (13a, 13b).

8. Système de projecteur de véhicule à absorption de chocs (1) selon l'une quelconque des revendications précédentes, dans lequel le dispositif de transmission de force (12) comprend au moins deux arbres rotatifs adjacents (13a, 13b), un premier arbre rotatif (13a) et un deuxième arbre rotatif (13b) étant respectivement couplés mécaniquement à au moins deux éléments de déclenchement (6), le premier arbre rotatif (13a) et le deuxième arbre rotatif (13b) étant orientés l'un par rapport à l'autre de telle sorte qu'un axe de rotation (x1) du premier arbre rotatif (13a) et un axe de rotation (x2) du deuxième arbre rotatif (13b) sont orientés l'un par rapport à l'autre avec un angle d'au moins 5°, de préférence entre 10° et 30°, un élément de commande (14) étant de préférence disposé exactement entre des arbres rotatifs (13a, 13b) voisins.

9. Système de projecteur de véhicule à absorption de chocs (1) selon l'une des revendications précédentes, dans lequel le mouvement de rotation de l'élément de commande (14) poussant l'élément de blocage (8a, 8b) dans la position de libération (FP) à l'encontre de la première force élastique (f1) du premier élément de ressort (11a) nécessite une rotation de l'élément de commande (14) d'au moins 10°, de préférence d'au moins 20°, de manière particulièrement préférée d'au moins 30°.

10. Système de projecteur de véhicule à absorption de chocs (1) selon l'une des revendications précédentes, dans lequel l'élément de commande (14) est relié fonctionnellement à l'élément de blocage (8a, 8b) par l'intermédiaire d'un élément de déverrouillage (16) disposé de manière à pouvoir se déplacer linéairement dans l'au moins un mécanisme de déclenchement (7a, 7b) de telle sorte, qu'un mouvement de rotation de l'élément de commande (14) peut être converti en un déplacement linéaire de l'élément de déverrouillage (16), l'élément de déverrouillage (16) étant conçu pour s'engager dans l'élément de blocage (8a, 8b), de sorte que, lors de l'engagement, le déplacement linéaire de l'élément de déverrouillage (16) pousse la section d'engagement (9) de l'élément de blocage (8a, 8b) dans la position de libération (FP).

11. Système de projecteur de véhicule à absorption de chocs selon la revendication 10, dans lequel l'élément de déverrouillage (16) présente une section d'engagement(16a) sensiblement en forme de coin, qui est conçue à s'engager avec une section d'engagement (9a) de l'élément de blocage (8a, 8b) réalisée de manière complémentaire à la section d'engagement (16a) de l'élément de déverrouillage (16), la section d'engagement (16a) de l'élément de déverrouillage (16) étant en contact avec la section d'engagement (9a) de l'élément de blocage (8a, 8b) pendant le passage de l'élément de blocage (8a, 8b) dans la position de libération (FP) pour la transmission de force.

12. Système de projecteur de véhicule à absorption de chocs selon l'une des revendications précédentes, dans lequel le système de projecteur de véhicule à absorption de chocs (1) comporte au moins deux mécanismes de déclenchement (7a, 7b), un premier mécanisme de déclenchement (7a) étant disposé sur une face supérieure du boîtier de projecteur de véhicule (3) et un deuxième mécanisme de déclenchement (7b) étant disposé sur une face inférieure opposée du boîtier de projecteur de véhicule (3), dans lequel, à partir de chaque mécanisme de déclenchement (7a, 7b), un bras mécanique (17a, 17b) couplé à l'élément de blocage respectif (8a, 8b) et pouvant être déplacé conjointement avec celui-ci s'étend essentiellement en direction du mécanisme de déclenchement opposé (7a, 7b), dans lequel, entre les deux mécanismes de déclenchement (7a, 7b) est formée une bascule (17c), les bras (17a, 17b) s'engageant à des extrémités opposées de la bascule (17c), de sorte que son mouvement descendant du bras (17a) du mécanisme de déclenchement supérieur (7a) est converti en un mouvement ascendant du bras (17b) du mécanisme de déclenchement inférieur (7b), ce qui permet un déclenchement mécanique des deux mécanismes de déclenchement (7a, 7b) est couplé entre eux, un déplacement du premier élément de blocage (8a) lors du passage dans sa position de libération et un déplacement couplé à celui-ci du deuxième élément de blocage (8b) lors du passage dans sa position de libération s'effectuant de préférence le long d'une trajectoire s'étendant de manière opposée, de préférence antiparallèle.

13. Système de projecteur de véhicule à absorption de chocs (1) selon l'une des revendications précédentes, dans lequel un deuxième élément de ressort (11b) est disposé entre l'élément de châssis de véhicule (2) et le boîtier de projecteur de véhicule (3), lequel est adapté pour pousser le boîtier de projecteur de véhicule (3) dans la position de base (GP) par une deuxième force de ressort (f2), de sorte que le passage dans la position de réglage (VP) s'effectue à l'encontre de la deuxième force de ressort (f2).

14. Système de projecteur de véhicule (1) absorbant les chocs selon l'une des revendications précédentes, dans lequel le guide (5) est conçu comme un trou oblong droit ou en forme d'arc de cercle pour recevoir et guider le moyen de guidage (4).

15. Véhicule automobile comprenant un système de projecteur de véhicule absorbant les chocs selon l'une quelconque des revendications précédentes.
